# EUROPÄISCHE PATENTSCHRIFT

(11) **EP 1 227 867 B1**
(45) Veröffentlichungstag und Bekanntmachung des Hinweises auf die Patenterteilung: **28.12.2005**
(21) Anmeldenummer: 00953140.1
(22) Anmeldetag: 02.08.2000
(51) Int. Cl.: B01D 19/00

(54) **VERFAHREN ZUR ENTFERNUNG VON SAUERSTOFF AUS WÄSSRIGEN MONOMERENLÖSUNGEN**
METHOD FOR ELIMINATING OXYGEN CONTAINED IN AQUEOUS MONOMER SOLUTIONS
PROCEDE POUR ELIMINER L'OXYGENE CONTENU DANS DES SOLUTIONS MONOMERES AQUEUSES

(30) Priorität: 17.08.1999 DE 19938574
(43) Veröffentlichungstag der Anmeldung: 07.08.2002
(73) Patentinhaber: Stockhausen GmbH, 47805 Krefeld (DE)
(72) Erfinder: SCHULTE, Jürgen, D-47807 Krefeld (DE); ALBIN, Detlef, D-47441 Moers (DE)
(74) Vertreter: Wolff, Felix
(86) Internationale Anmeldenummer: PCT/EP2000/007475
(87) Internationale Veröffentlichungsnummer: WO 2001/012291

(56) Entgegenhaltungen:
- EP-A- 0 185 827
- EP-A- 0 646 400
- DE-A- 2 300 205
- DE-A- 3 819 254
- DE-A- 19 525 474
- US-A- 3 839 435
- PATENT ABSTRACTS OF JAPAN vol. 014, no. 134 (C-0701), 14. März 1990 (1990-03-14) & JP 02 006413 A (MITSUBISHI RAYON CO LTD), 10. Januar 1990 (1990-01-10)
- PATENT ABSTRACTS OF JAPAN vol. 011, no. 298 (P-620), 26. September 1987 (1987-09-26) & JP 62 089908 A (SUMITOMO ELECTRIC IND LTD), 24. April 1987 (1987-04-24)

## Beschreibung

Die vorliegende Erfindung betrifft ein Verfahren zum Entfernen von Sauerstoff aus wässrigen Monomerenlösungen.

Sauerstoff inhibiert und beeinflußt die Polymerisation von Monomeren, insbesondere auch die radikalische Polymerisation von wasserlöslichen Monomeren bei der Herstellung von wasserlöslichen oder wasserquellbaren Polymerisaten, die u. a. als Flockungs-, Entwässerungs- oder Retentionsmittel bzw. als Superabsorber oder Verdickungsmittel eingesetzt werden.

Eine weitgehende Entfernung des Sauerstoffs vor und während der Polymerisation verhindert eine Inhibierung bzw. den Abbruch der Polymerisationsreaktion und ermöglicht insbesondere bei technischen Herstellungsverfahren deren kontrollierten Start und Verlauf und damit die Herstellung der gewünschten Polymerisate.

Es hat deshalb in der Vergangenheit nicht an Versuchen gefehlt, Verfahren und/oder Vorrichtungen zur Verfügung zu stellen, mit denen der Sauerstoff aus den Monomerenlösungen entfernt wird. In der Regel basieren diese Verfahren darauf, daß der Sauerstoff mittels einem Inertgas aus der Monomerenlösung abgestrippt wird. So lehrt die JP 02 006413 A eine Füllkörperkolonne, durch die die Monomerenlösung im Gegenstrom mit einem Inertgas fließt. Die DE 35 40 994 lehrt, die Monomerenlösung und Stickstoff in einer Zweistoffdüse im Gleichstrom innig zu mischen und dadurch den Sauerstoff aus der Monomerenlösung zu entfernen. Diese Vorgehensweise hat jedoch den Nachteil, daß die Düse durch Polymerisatbildung sehr leicht verstopft und/oder verklebt und die Sauerstoffentfernung dadurch störanfällig ist. Darüber hinaus entstehen regelmäßig lange Stillstandszeiten, bedingt durch notwendige Wartung, und weiterhin ist der Inertgasverbrauch bei diesen Verfahren vergleichsweise hoch.

Es ist daher Aufgabe der vorliegenden Erfindung, ein Verfahren zur Entfernung von Sauerstoff aus Monomerenlösungen zur Verfügung zu stellen, das eine geringe Störanfälligkeit und einen sehr niedrigen spezifischen Inertgasverbrauch aufweist, sowie eine kontinuierliche Fahrweise erlaubt.

Die Aufgabe wird erfindungsgemäß durch die Bereitstellung eines kontinuierlichen Verfahrens zur Entfernung von Sauerstoff aus Monomerenlösungen mit einem Inertgas in einem säulenförmigen Apparat gemäß Anspruch 1 gelöst.

Vorzugsweise wird das erfindungsgemäße Verfahren in einem Apparat mit zylindrischem Behälter, dessen Verhältnis von Durchmesser zu Höhe 0,95 bis 0,1, vorzugsweise 0,8 bis 0,3, besonders bevorzugt 0,5 bis 0,35 beträgt, durchgeführt.

Vorzugsweise wird das Inertgas am Boden des Apparates, vorteilhafterweise feinblasig verteilt, eingetragen und am Kopf des Apparates abgezogen. Die Verteilung des Inertgases erfolgt vorzugsweise mit einer Membran oder mit einem Rohrstutzen. Bevorzugte Inertgase sind Stickstoff und/oder Kohlendioxid.

Die Monomerenlösung wird vorzugsweise am Kopf des Apparates zugegeben, durchströmt den Apparat als Flüssigkeitssäule und wird vorzugsweise knapp oberhalb des Bodens abgezogen. Die Verweilzeit der Flüssigkeit in dem Apparat wird durch den Füllstand und den Durchsatz variiert.

In einer bevorzugten Ausführungsform wird in der Flüssigkeitssäule mindestens ein Teilbereich durchmischt. Vorzugsweise werden mehrere Teilbereiche der Flüssigkeitssäule durchmischt. Die Höhe des/der Teilbereichs/Teilbereiche beträgt jeweils vorzugsweise 5 bis 50%, besonders bevorzugt 10-30 % der Gesamthöhe der Flüssigkeitssäule. Bei zwei Teilbereichen beträgt die Höhe des oberen Teilbereichs vorzugsweise 5 bis 50%, besonders bevorzugt 10 bis 30% und die Höhe des unteren Bereichs vorzugsweise 10 bis 30% der Gesamthöhe der Flüssigkeitssäule. Vorzugsweise erstreckt sich die Durchmischung über den gesamten Querschnitt der Flüssigkeitssäule. Die Durchmischung ist vorteilhafterweise turbulent. Besonders vorteilhaft wird die Durchmischungen mit Rührorganen, vorzugsweise mit Turbinenrührem und/oder Dispergierscheiben erzeugt. Ganz besonders bevorzugt wird jeweils ein Teilbereich von zwei Turbinenrührem, zwei Dispergierscheiben oder einem Turbinenrührer und einer Dispergierscheibe durchmischt, wobei die Dispergierscheibe vorzugsweise unter dem Turbinenrührer angeordnet ist. Hierbei werden die durch diese Rührorgange erzeugten radialen Rühreffekte, d. h. radialen Strömungsrichungen ausgenutzt.

Die Höhe der Teilbereiche ist abhängig von der Art der wässrigen Monomerenlösungen. Bei der Herstellung von Polyelektrolyten, die kationische Monomeren enthalten, werden größere Höhen gewählt. Mehrere Teilbereiche können parallel oder in Reihe angeordnet werden.

Das erfindungsgemäße Verfahren hat den Vorteil, daß der spezifische Inertgasverbrauch für die vollständige Sauerstoffentfemung sehr gering ist. Durch die Variation des Füllstandes und des Durchsatzes können unterschiedlichste Monomerenlösungen vollständig von Sauerstoff befreit werden. Die Stillstandszeiten aufgrund von Wartung sind bei dem erfindungsgemäßen Verfahren sehr gering, die Zeitinterwalle zwischen den Wartungen sind verlängert.

Bevorzugt wird das erfindungsgemäße Verfahren in einem zylindrischen Behälter mit zusätzlichen Einbauten ausgeführt, die vorzugsweise scheibenförmig ausgebildet sind und sich über Teilbereiche des Querschnitts des Apparates erstrecken, um Rückvermischung der Flüssigkeitssäule möglichst weitgehend zu vermeiden. Vorzugsweise sind diese Einbauten kreisringförmig und vorzugsweise oberhalb der Rührorgane angeordnet.

Vorzugsweise wird bei dem erfindungsgemäßen Verfahren ein Apparat verwendet, der eine automatische Füllstandsregelung aufweist, mit der die Höhe der Flüssigkeitssäule auf einem bestimmten Niveau gehalten wird.

Das erfindungsgemäße Verfahren wird vorzugsweise zur Entfernung von Sauerstoff aus einer Monomerenlösung verwendet. In diesem Fall ist im Auslaß des Apparates vorzugsweise eine Sauerstoffmessung angeordnet, mit der der Sauerstoffgehalt kontrolliert wird und die gegebenenfalls zur automatischen Regelung der Sauerstoffentfernung eingesetzt werden kann. Ist der gemessene Sauerstoffgehalt zu hoch, wird der Füllstand des Behälters erhöht und/oder der Durchsatz reduziert. Außerdem kann bei einer zu hohen Sauerstoffkonzentration der Inertgasvolumenstrom erhöht werden.

Ein Apparat für die Durchführung des erfindungsgemäßen Verfahrens kann auch zur Flotation sowie bei jeglicher Art von Stoffaustausch- und/oder Reaktionsprozessen eingesetzt werden.

Im Folgenden wird das erfindungsgemäße Verfahren anhand von zwei Beispielen erläutert. Die Ausführungen sind lediglich beispielhaft und schränken somit den allgemeinen Erfindungsgedanken nicht ein. Es zeigen:
- **Figur 1**: Schematisch einen Apparat für das erfindungsgemäße Verfahren zur Entfernung von Sauerstoff aus Monomerenlösungen ohne Einbauten
- **Figur 2**: Schematisch den Apparat mit Einbauten zur Entfernung von Sauerstoff aus Monomerenlösungen

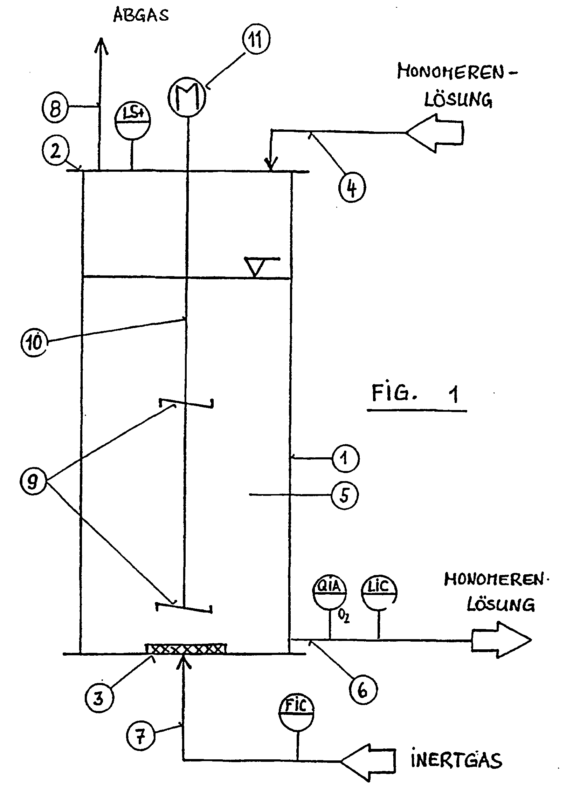

In **Figur 1** ist ein Apparat 1 für das erfindungsgemäße Verfahren ohne Einbauten dargestellt. Der Apparat ist zylinderförmig und weist einen Deckel 2 am Kopf des Apparates und einen Deckel 3 am Boden des Apparates auf, in den eine Membran eingelassen ist. Durch den Einlaß 4 in dem Deckel 2 wird eine Monomerenlösung in den Apparat gepumpt und durchströmt diesen als Flüssigkeitssäule 5, bevor sie den Apparat durch den Auslaß 6, der sich knapp oberhalb des Bodens befindet, verläßt. Der Apparat ist zu etwa 80% mit der Monomerenlösung gefüllt.

Der Inertgasstrom wird im Gegenstrom zum Flüssigkeitsstrom geführt. Dafür wird der Inertgasstrom über die Membran im Deckel 3 feinblasig verteilt in den Apparat eingetragen, durchströmt die Flüssigkeitssäule 5 und verläßt den Apparat 1 über den Auslaß 8. Der Fachmann erkennt, daß die Inertgasverteilung auch über jedes andere dem Fachmann bekannte Verteilorgan, wie z. B. eine Düse oder eine Fritte oder dergleichen, erfolgen kann.

In dem Apparat sind zwei Rührorgane 9 auf einer Rührwelle 10 angeordnet, die von einem am Deckel 2 montierten Motor 11 angetrieben wird. Durch die Rührorgane wird die Monomerenlösung nur im Bereich um die Turbinenscheiben turbulent durchmischt, wobei sich die Durchmischung über den gesamten Querschnitt des Apparates erstreckt. Durch die beiden Rührorgane werden 20 % bis 50 % der Gesamthöhe der Flüssigkeitssäule turbulent durchmischt.

Mit einer Füllstandsmessung und -regelung kann jeder beliebige Füllstand im Apparat eingestetellt werden. Ferner befindet sich im unteren Auslaß eine Sauerstoffmessung auf, mit dem der Sauerstoffgehalt der Monomerenlösung gemessen und die Sauerstoffentfemung entsprechend geregelt wird.

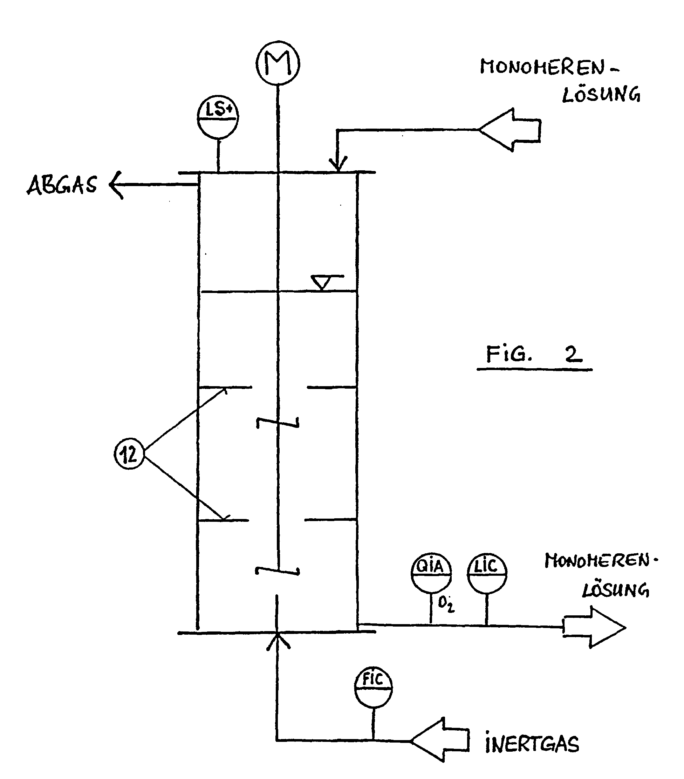

**Figur 2** zeigt den Apparat gemäß Figur 1 jedoch mit Einbauten 12, die ringförmig gestaltet sind und knapp oberhalb der Turbinenscheiben angeordnet sind. Die Einleitung des Intertgasstromes erfolgt über einen Rohrstutzen.

## Patentansprüche

1. Kontinuierliches Verfahren zur Entfernung von Sauerstoff aus vorzugsweise wässrigen Monomerenlösungen mit einem Inertgas in einem säulenförmigen Apparat, wobei die Monomerenlösung und das Inertgas den Apparat im Gegenstrom durchströmen, **dadurch gekennzeichnet, dass** mindestens ein, vorzugsweise mehrere Teilabschnitt(e) der Flüssigkeitssäule, jeweils in radialer Strömungsrichtung mit einem Rührorgan, vorzugsweise mit einem Turbinenrührer und/oder einer Dispergierscheibe, turbulent durchmischt wird/werden.

2. Verfahren nach Anspruch 1, **dadurch gekennzeichnet, dass** das Inertgas am Boden des Apparates, vorzugsweise feinblasig verteilt, eingetragen und am Kopf abgezogen wird.

3. Verfahren nach Anspruch 2, **dadurch gekennzeichnet, dass** das Inertgas mit einer Membran und/oder mindestens einem Rohrstutzen verteilt wird.

4. Verfahren nach einem der Ansprüche 1-3, **dadurch gekennzeichnet, dass** das Inertgas Stickstoff und/oder Kohlendioxid ist.

5. Verfahren nach einem der Ansprüche 1-4, **dadurch gekennzeichnet, dass** die Monomerenlösung am Kopf des Apparates zugegeben, als Flüssigkeitssäule den Apparat durchströmt und knapp oberhalb des Bodens abgezogen wird.

## Claims

1. A continuous process for removing oxygen from preferably aqueous monomer solutions using an inert gas in a column-shaped apparatus, whereby the monomer solution and the inert gas flow countercurrently through the apparatus, **characterised in that** at least one, and preferably several, section(s) of the liquid column is(are) turbulently mixed in a radial flow direction with a stirring element, preferably a turbine stirrer and/or a dispersing plate.

2. A method according to claim 1, **characterised in that** the inert gas, preferably dispersed in the form of fine bubbles, is introduced at the bottom of the apparatus and withdrawn at the head thereof.

3. A method according to claim 2, **characterised in that** the inert gas is dispersed using a membrane and/or at least one pipe socket.

4. A method according to one of claims 1 to 3, **characterised in that** the inert gas is nitrogen and/or carbon dioxide.

5. A method according to one of claims 1 to 4, **characterised in that** the monomer solution is added at the head of the apparatus, flows through the apparatus as a liquid column, and is withdrawn slightly above the bottom.

## Revendications

1. Procédé continu d'élimination de l'oxygène de solutions monomères de préférence aqueuses au moyen d'un gaz inerte dans un appareil en forme de colonne, dans lequel la solution monomère et le gaz inerte traversent l'appareil en sens opposés, **caractérisé en ce qu'**on mélange de manière turbulente et dans la direction radiale d'écoulement au moins un et de préférence plusieurs tronçons partiels de la colonne de liquide au moyen d'un organe de mélange et de préférence au moyen d'un mélangeur à turbine et/ou d'un disque de dispersion.

2. Procédé selon la revendication 1, **caractérisé en ce que** le gaz inerte est introduit dans le fond de l'appareil de préférence sous la forme d'une répartition de petites bulles et est extrait en tête.

3. Procédé selon la revendication 2, **caractérisé en ce que** le gaz inerte est réparti au moyen d'une membrane et/ou d'au moins une tubulure.

4. Procédé selon l'une des revendications 1 à 3, **caractérisé en ce que** le gaz inerte est l'azote et/ou le dioxyde de carbone.

5. Procédé selon l'une des revendications 1 à 4, **caractérisé en ce que** la solution de monomères est ajoutée en tête de l'appareil, traverse l'appareil sous la forme d'une colonne de liquide et est extraite juste au-dessus du fond.
